(19) Europäisches Patentamt
European Patent Office
Office européen des brevets

(11) Veröffentlichungsnummer: **0 385 337**
**A2**

(12) **EUROPÄISCHE PATENTANMELDUNG**

(21) Anmeldenummer: **90103684.8**

(51) Int. Cl.5: **G11B 9/10**

(22) Anmeldetag: **26.02.90**

(30) Priorität: **02.03.89 DE 3906521**

(43) Veröffentlichungstag der Anmeldung:
**05.09.90 Patentblatt 90/36**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Funhoff, Dirk, Dr.**
**Panoramastrasse 3a**
**D-6900 Heidelberg(DE)**
Erfinder: **Fuchs, Harald, Dr.**
**Boehlweg 32**
**D-6719 Carlsberg(DE)**
Erfinder: **Licht, Ulrike, Dr.**
**Meerfeldstrasse 62**
**D-6800 Mannheim 1(DE)**
Erfinder: **Schrepp, Wolfgang, Dr.**
**Sitzbuchweg 114**
**D-6900 Heidelsberg(DE)**
Erfinder: **Hickel, Werner, Dr.**
**Valentin-Streuber-Strasse 66**
**D-6800 Mannheim 24(DE)**
Erfinder: **Knoll, Wolfgang, Dr.-habil**
**Elsa-Brandstroem-Strasse 18d**
**D-6500 Mainz(DE)**
Erfinder: **Wegner, Gerhard, Prof. Dr.**
**Carl-Zuckmayer-Strasse 1**
**D-6500 Mainz-Drais(DE)**
Erfinder: **Duda, Gisela, Dr.**
**Germanenweg 13**
**D-6074 Dietzenbach 2(DE)**

(54) **Verfahren zum Auslesen von Informationen, die in dünnen Polymerschichten gespeichert sind.**

(57) Die Erfindung betrifft ein Verfahren zum Auslesen von Informationen, die in dünnen Polymerschichten gespeichert sind, wobei Informationen in dünnen Polymerschichten, die auf eine metallische oder Halbleiter-Schicht aufgebracht worden sind, mittels elektromagnetischer oder Teilchenstrahlen, die in den bestrahlten Bereichen eine bleibende Änderung der Eigenschaften der Polymerschichten hervorrufen, eingebracht worden sind, durch Oberflächen-Plasmonen ausgelesen werden.

EP 0 385 337 A2

# Verfahren zum Auslesen von Informationen, die in dünnen Polymerschichten gespeichert sind

Die Erfindung betrifft ein neues Verfahren zum Auslesen von Informationen, die in Polymerschichten einer Schichtdicke < 0,1 µm gespeichert sind.

Die optische Informationsspeicherung in flüssig-kristallinen (= LC) Polymeren mit photoadressierbaren (mesogenen Seiten-) Gruppen wurde bereits in Abstracts of the International Liquid Cristal Conference, Freiburg, BRD, 15. bis 19.08.1988 behandelt.

Eine grundsätzliche Art des "Schreibens" besteht aus lokaler optischer Erwärmung eines vororientierten Polymers in die isotrope Phase mit nachfolgender schneller Abkühlung der Matrix, so daß der ungeordnete Fleck, das "Bit", eingefroren wird (vgl. V.P. Shibaev, S.G. Kostromin, N.A. platé, S.A. Ivanov, V.Yn. Vetrov und I.A. Yakovlev, Polymer Commun. 24, 364 (1983)). Ein weiterer Mechanismus wurde kürzlich von M. Eich, J.H. Wendorff, B. Beck und H. Ringsdorf (vgl. Macromol. Chem. Rapid Commun. 8, 59 (1987) vorgeschlagen. Dieser beinhaltet die optische Induktion eines doppelbrechenden Musters durch eine lokale Störung der flüssigkristallinen Ordnung, die den Brechnungsindex des Speichermediums moduliert.

Beide Techniken gewinnen an Empfindlichkeit (und erlauben folglich Laserschreiben mit geringer Leistung), wenn geeignete Farbstoffe zur optischen Markierung verwendet werden, die entweder kovalent an die Polymermatrix gebunden sind oder einfach zugesetzt werden und eine homogene Mischung bilden. Während das erste Konzept Vorteile für die (langfristige) Stabilität und Homogenität des Speichermediums haben mag, ist das zweite das einfachere Verfahren, insbesondere solange man noch nach einem optimierten Wirts-Gast-System sucht.

Ein weiteres entscheidendes Erfordernis für ein künftiges Speichermedium ist die Möglichkeit, die geschriebene Information mit geringer Leistung auszulesen. Deshalb sind hochempfindliche Auslesetechniken erforderlich, was besonders wichtig ist, wenn ultradünne Speichermedien ins Auge gefaßt werden.

Gegenstand der vorliegenden Erfindung ist ein Verfahren zum Auslesen von Informationen, die in dünnen Polymerschichten gespeichert sind, das dadurch gekennzeichnet ist, daß Informationen, die in Polymerschichten einer Schichtdicke < 0,1 µm, die auf eine metallische oder Halbleiter- Schicht aufgebracht sind, durch bildmäßiges Belichten oder lithographische Verfahren mittels elektromagnetischer Strahlen oder Teilchenstrahlen, die in den bestrahlten Bereichen eine bleibende Änderung der Eigenschaften der Polymerschichten hervorrufen, eingebracht worden sind, durch Oberflächen-Plasmonen ausgelesen werden.

Die Polymerschichten einer Schichtdicke < 0, 1 µm können dazu durch Aufschleudern ihrer Lösungen, Aufdampfen oder Adsorption aus der Flüssigphase, vorzugsweise jedoch mittels der Lamgmuir-Blodgett-Technik auf eine metallische oder Halbleiter-Schicht aufgebracht werden. Eine bevorzugte Ausführungsform des erfindungsgemäßen Verfahrens besteht darin, daß die Polymerschichten mindestens einen Farbstoff in definierter Konzentration pro Flächeneinheit enthalten, bevorzugt einen oleophilen Farbstoff, der in organischen Lösungsmitteln löslich ist und sich homogen in der Polymermatrix verteilt.

Als Polymere für die Polymerschichten können organische Polymerisate oder organische Polykondensate eingesetzt werden, wobei als organische Polymerisate Homo- oder Copolymerisate von Acrylsäure- oder Methacrylsäurealkylestern, als organische Polykondensate vorzugsweise in γ-Stellung langkettig substituierte Polyglutamate oder in γ-Stellung unterschiedlich alkylsubstituierte Copolyglutamate eingesetzt werden können. Besonders bevorzugt als organisches Polykondensat ist dabei Poly (γ-methyl-L-glutamat-co-γ-n-octadecyl-L-glutamat).

Für das erfindungsgemäße Verfahren kann das bildmäßige Belichten mittels elektromagnetischer oder Teilchenstrahlen unter Verwendung einer auf die Polymerschichten aufgelegten Maske oder in einem lithographischen Verfahren durch direkte Bestrahlung mit einem fokussierten Elektronen- oder Laserstrahl erfolgen.

Die durch bildmäßiges Belichten oder lithographische Verfahren mittels elektromagnetischer Strahlen oder Teilchenstrahlen in den bestrahlten Bereichen hervorgerufene bleibende Änderung der Eigenschaften der Polymerschichten kann in einer strukturellen Phasenumwandlung des Polymeren bestehen und/oder durch Entfärben oder Umwandeln des oder der darin enthaltenen Farbstoffe erhalten werden.

Bei dem erfindungsgemäßen Verfahren kann das Aus lesen von Informationen durch Oberflächen-Plasmonen unter Verwendung eines Laserstrahls erfolgen, wobei als Laserstrahl der eines Helium-Neon-Lasers oder eines Argonionen-Lasers bevorzugt ist.

Überraschenderweise lassen sich also Informationen in auf metallische oder Halbleiter-Schichten aufgebrachten Polymerschichten einer Schichtdicke < 0,1 µm erfindungsgemäß sehr vorteilhaft durch Oberflächen-Plasmonen auslesen.

Oberflächenplasmonen, kurz PSP (Plasmon Surface Polaritons) werden von H. Reather in

"Physics of Thin Films", Hrsg. G. Hass, M.H. Francombe und R.W. Hoffmann (Academic Press, N.Y., 1977), Bd. 9, S. 145-261 behandelt.

Plasmonen sind die Quanten der Plasmaschwingung, d.h. einer kollektiven Anregung des Leitungselektronengases in einem Metall oder Halbleiter. Plasmonen können dann angeregt werden, wenn man Elektronen durch einen dünnen Metallfilm schickt oder wenn Elektronen bzw. Photonen von einer dünnen Metallschicht reflektiert werden, wobei die Elektronen Energie verlieren bzw. die Photonen absorbiert und in ein Plasmon umgesetzt werden. Die Plasmonen sind mit starken elektromagnetischen Feldern verbunden. Aufgrund des resonanzartigen Charakters tritt eine ca. 20-fache Feldstärkenüberhöhung auf. Diese starken elektromagnetischen Felder der Plasmonen werden durch die aufgebrachte Schicht bzw. die aufgebrachten Schichten in die Metall- oder Halbleiterschicht zurückgedrängt. Die Dispersionskurve, d.h. die Abhängigkeit der Frequenz von dem Wellenvektor für Oberflächenplasmonen, wird durch die aufgebrachten Deckschichten verschoben. Phasen- und Gruppengeschwindigkeit der Oberflächenplasmonen werden kleiner, und zwar ganz analog zu einem Photon, das sich in einem Medium der Brechzahl n ausbreitet. Lateralstrukturen innerhalb einer zu untersuchenden, auf den Metallfilm aufgebrachten Schicht oder von mehreren Deckschichten führen zu Bereichen mit unterschiedlicher Dispersion für Oberflächenplasmonen. Daher können bei Einstrahlung des polarisierten Lichtes unter einem festen Winkel auf die Probe Lateralstrukturen der aufgebrachten Schicht bzw. Schichten aufgrund ihrer unterschiedlichen Reflexion, d.h. ihrer unterschiedlichen Helligkeit erkannt werden. Bei Einstrahlung des polarisierten Lichtes unter variablen Winkeln kann die Dispersion für verschiedene Bereiche der aufgebrachten Schicht bzw. Schichten bei unterschiedlichen Einfallswinkeln erfüllt werden. Die einzelnen Bereiche verändern dabei wiederum ihre Helligkeit. Auch auf diese Weise können Lateralstrukturen sichtbar gemacht werden.

Für die optische Anregung von Oberflächenplasmonen wird die Komponente des komplexen Wellenvektors des einfallenden Lichtes parallel zur Oberfläche des Metall- oder Halbleiterfilms betrachtet. Wenn der Einfallswinkel des eingestrahlten polarisierten Lichtes die Dispersionsrelation im freien Leitungsträgerplasma oder an der Grenzfläche erfüllt, werden Oberflächenplasmonen ausgelöst, so daß dann die bestrahlte Metall- oder Halbleiteroberfläche nur schwach reflektierend erscheint. Die Wellenvektoren von Oberflächenplasmonen parallel zur Oberfläche des Metall- oder Halbleiterfilme liegen jedoch in einem Bereich, der auch durch größte Einfallswinkel des Lichtes nicht erreicht werden kann.

Aus diesem Grunde wird eine Kopplungsanordnung zwischen der verwendeten Lichtquelle und der Oberfläche des Metallfilms angewandt. Eine Möglichkeit ist eine sogenannte Gitterkopplung, bei der die Oberfläche des Metallfilms mit einer Gitterstruktur moduliert wird. Eine andere Möglichkeit ist die Einkopplung des eingestrahlten polarisierten Lichtes mit Hilfe eines Prismas oberhalb des Grenzwinkels für die Totalreflektion. Hierzu kann entweder eine dünne Metallschicht oder Halbleiterschicht direkt auf das Prisma aufgebracht werden oder es wird zwischen der totalreflektierenden Fläche des Prismas und der Metallschicht, die auf ein festes Substrat (z.B. Glasobjektträger) aufgebracht wird, ein bestimmter Abstand eingehalten. Die erste Art der Prismenkopplung wird als Kretschmann-Konfiguration, die zweite Art der Prismenkopplung als Otto-Konfiguration bezeichnet. Im ersten Falle werden die zur untersuchenden Schichten auf die dem Prisma abgewandte Rückseite der Metallschicht aufgebracht; bei der Otto-Konfiguration werden die zu untersuchenden Schichten auf die Oberfläche der Metallschicht aufgebracht, so daß diese Schichten zwischen der Metallschicht und Prisma liegen.

Eine Vorrichtung zur Untersuchung der physikalischen Eigenschaften von dünnen Schichten ist mechanisch und optisch einfach aufgebaut. Bevorzugt wird zur Erzeugung der Plasmonen eine Prismenkopplung in der erwähnten Kretschmann-Konfiguration verwendet, wobei an die Prismenoberflächen ein Objektträger mittels Immersionsflüssigkeit geklebt wird, auf dessen Rückseite die Metallschicht aufgebracht ist. Alternativ zu diesem Aufbau kann das Metall auch direkt auf die Prismenoberfläche aufgebracht werden. Als Metall kommen Silber, Gold, Kupfer sowie Aluminium oder Schichtsysteme aus diesen Metallen zum Einsatz. Als vorteilhaft hat sich die Verwendung eines Schichtsystems, bestehend aus 2 bis 5 nm Chrom und 40 nm Gold erwiesen. Der dadurch entstandene Spiegel wird mit parallelem monochromatischen oder farbigen, parallel zur Einfallsebene polarisierten Licht durch eine der beiden freien Seitenflächen des Prismas unter flachem Winkel beleuchtet und mit Hilfe einer achromatischen Linse kleiner Brennweite, welche auf den Spiegel fokussiert ist, durch die andere freie Seitenfläche des Prismas auf einen Schirm oder ein Okular abgebildet. Die erreichbare Vergrößerung wird durch die Brennweite der Linse bestimmt.

Auf der luftseitigen Fläche des Spiegels können durch bekannte Tauch-, Sprüh- oder Kontakttechniken dünne dielektrische Deckschichten zur Untersuchung aufgebracht werden. Es ist darauf zu achten, daß der Spiegel dabei nicht beschädigt wird, und gegebenenfalls muß er zuvor mit einer inerten Schutzschicht z.B. aus Siliziumdioxid oder

Silan versehen werden, wobei die Dicke dieser Schicht kleiner als die Dicke des Spiegels sein muß. Die Dunkelebene der Linse bzw. des Linsensystems und die Deckschichten sind bei dieser Vorrichtung frei zugänglich, wobei ein besonderer Vorteil dadurch gegeben ist, daß die Deckschichten auch in unterschiedlichen Medien untersucht werden können, so z.B. in stark verunreinigten flüssigen Umgebungen, da der Strahlengang der Lichtquelle nicht durch dieses Medium geführt werden muß. Untersucht werden können Schichten im Dikkenbereich kleiner als $10^3$ nm. Hinsichtlich Kontrast, Informationsgehalt und Wirtschaftlichkeit ist das Verfahren und die Vorrichtung vor allem im Bereich ultradünner Schichten mit Dicken kleiner als 5 bis 2 nm bekannten Verfahren überlegen.

Die Oberflächenplasmon-Mikroskopie ist von B. Rothenhäusler und u. Knoll in Nature 332, 615 (1988) beschrieben, wobei mittels der Langmuir-Blodgett-Technik auf Silber aufgebrachte Cd-Arachidat-Schichten untersucht wurden. Die Langmuir-Blodgett-Technik zur Herstellung dünner Schichten und Mehrlamellensystemen wurde beispielsweise von H. Kuhn, D. Möbius und H. Bücher in Physical Methods of Chemistry, Hrsg. A. Weissberger und B.W. Rossitter (Wiley, N.Y. 1972), Teil III B., Kap. VII beschrieben.

Als Polymere zur Herstellung dünner Polymerschichten mit Schichtdicken < 0,1 µm eignen sich für das erfindungsgemäße Verfahren vorzugsweise solche organischen Polymerisate und Polykondensate, wie sie mittels der Langmuir-Blodgett-Technik auf metallische Schichten aufzubringen bzw. übertragbar sind. Derartige geeignete organische Polymere sind beispielsweise in EP-A-300 420 beschrieben. Dies können beispielsweise insbesondere in γ-Stellung langkettig substituierte Polyglutamate oder Polymerisate, die über polare Gruppen, wie z.B.

-O- , 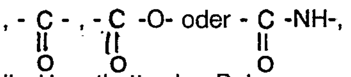 oder

an die Hauptkette des Polymeren gebundene langkettige n-Alkylseitengruppen enthalten, sein, die in einem organischen Lösungsmittel, wie z.B. n-Heptan oder $CHCl_3$ gelöst, an der Grenzfläche Wasser/Luft gespreitet und nach Verdunstung des Lösungsmittels in üblicher Weise nach der Langmuir-Blodgett-Technik auf eine metallische oder Halbleiter-Schicht eines festen Schichtträgers übertragen werden.

Als Polymere bzw. zu polymerisierende Monomere, die nach der Langmuir-Blodgett-Technik auf eine metallische oder Halbleiterschicht übertragen werden können und sich für das erfindungsgemäße Verfahren eignen, kommen beispielsweise auch amphiphile Polyacetylenverbindungen, wie amphiphile Diacetylenmonocarbonsäuren und deren Derivate in Frage. Derartige monomere bzw. polymere Substanzen sind beispielsweise beschrieben in Journal of Polymer Science: Polymer Chemistry Edition, Vol. 17, 1631-1644 (1979), EP-A-22618, EP-A-77 577, EP-A-21 695 und US-A-4 314 021.

Neben der Langmuir-Blodgett-Technik eignen sich jedoch auch andere Methoden zur Herstellung von Polymerschichten mit Schichtdicken < 0,1 µm auf metallische oder Halbleiter-Schichten, beispielsweise das Aufschleudern von Polymerlösungen (spin coating), die Adsorption aus der Flüssigphase (= Self Assembly-Technik), Gießen und Aufdampfen (PVD und CVD, d.h. physikalische oder chemische Abscheidung aus der Gasphase) von organischen Polymeren. Hierfür eignen sich beispielsweise Homo- und Copolymerisate, wie z.B. Polymethacrylsäurealkylester, insbesondere Polymethacrylsäuremethylester, Polystyrol, Polycarbonat, Celluloseacetat, -butyrat und -alkylether. Die hierfür geeigneten organischen Polymerisate und Polykondensate können mittlere Molekulargewichte $\overline{M}_n$ zwischen 1000 und 1 000 000, vorzugsweise zwischen 20 000 und 200 000 aufweisen.

Die Polymerschichten sind im allgemeinen in Schichtdicken < 0,1 µm insbesondere 3 bis 4 nm auf der metallischen Schicht, beispielsweise dünnen, 40 bis 50 nm dicken Schichten aus Silber, Chrom, Gold, Kupfer, Aluminium oder deren Legierungen oder einer Halbleiterschicht, beispielsweise einer Silicium- oder Germaniumschicht, wobei diese metallischen oder Halbleiterschichten vorzugsweise auf einem festen optisch transparenten Trägermaterial, wie Glas oder einer dimensionsstabilen Kunststoffolie, z.B. aus Polyethylenterephthalat fixiert sind, aufgebracht.

Das Einbringen von Informationen in die dünnen Polymerschichten durch bildmäßiges Belichten mittels Strahlen, durch die in den bestrahlten Bereichen eine bleibende Änderung der Eigenschaften hervorgerufen wird, kann nach geeigneten üblichen Methoden erfolgen, beispielsweise durch Auflegen einer Maske auf die dünne Polymerschicht und Bestrahlen mit elektromagnetischen Strahlen des sichtbaren und ultravioletten Bereichs (zwischen 200 nm und 700 nm) z.B. Laserstrahlen zwischen 200 und 700 nm oder Teilchenstrahlen, wie α-, Neutronen-, Elektronen-, γ- und Röntgenstrahlen. Bevorzugt sind elektromagnetische Strahlen. Als Masken kommen dabei die üblichen in Frage, beispielsweise solche aus Metall. Sehr vorteilhaft können die Informationen auch durch lithographische Verfahren, beispielsweise durch direkte Bestrahlung mit einem fokussierten Elektronenstrahl, beispielsweise einer Energie von 5 bis 200 KeV, oder mit einem fokussierten Laserstrahl, beispielsweise einem Argonionenlaser in die dünne Polymerschicht eingebracht werden.

Eine bevorzugte Ausführungsform des erfindungsgemäßen Verfahrens besteht darin, daß in

der dünnen die Information aufnehmenden Polymerschicht ein oder mehrere Farbstoffe in definierter Konzentration pro Flächeneinheit enthalten sind. Vorzugsweise sind dies oleophile Farbstoffe, die in organischen Lösungsmitteln löslich sind.

Als Beispiele für geeignete oleophile Farbstoffe seien angeführt:

Farbstoffe auf Kohlenwasserstoffbasis und deren Derivate, beispielsweise Carotine, wie β-Carotin, Carotincarbonsäureester, wie β-Apo-8′-carotinsäureethylester (trans), oleophile Farbstoffe aus der Klasse der Sudanfarbstoffe, vorzugsweise Azo- und Disazofarbstoffe, besonders solche, die durch mindestens eine Alkylgruppe (z.B. Methyl- oder Ethylgruppe) in der ortho-Stellung zur Azogruppe substituiert sind, beispielsweise "Ölrot 0" (Oil Red C.I. Solvent Red 27; C.I. Nr. 26 125) oder "Fettrot bläulich" (Fat Red C.I. Solvent Red 10, C.I. Nr. 26 050) und andere Farbstoffe dieser Art (C.I. = Color Index der American Colors and Dyers Society).

Bei Anwendung der Langmuir-Blodgett-Technik für das Aufziehen der dünnen oleophilen Farbstoff enthaltenden Polymerschichten kommen insbesondere solche oleophilen Farbstoffe in Frage, die für sich allein keine geordneten Strukturen an der Grenzfläche Wasser/Luft bilden.

Der oleophile Farbstoff kann in geringen Mengen bis zu Mengen, in denen der flüssiganaloge Zustand des erfindungsgemäß mitzuverwendenden organischen Polymeren noch nicht gestört wird, eingesetzt werden.

Man kann den oleophilen Farbstoff als in den Polymerseitenketten des zur Ausbildung von Langmuir-Blodgett-Schichten geeigneten organischen Polymeren gelöst ansehen.

Die Erfindung wird durch die nachstehenden Beispiele näher erläutert.

Beispiel 1

Verwendet man zur Herstellung der dünnen Polymerschicht flüssigkristallines Material, wie Poly(γ-methyl-L-glutamat-co-γ-n-octadecyl-L-glutamat) (PM-co-OLG, $\overline{M}_n$ = 12000), so kann daraus eine monomolekulare Schicht an der Grenzfläche Wasser-Luft hergestellt werden, wenn sie von einem Lösungsmittel ausgebreitet wird, in dem das polypetidgrundgerüst eine schraubenförmige Konformation übernimmt, vgl. G. Duda, A.J. Schouten, T. Arndt, G. Lieser, G.F. Schmidt, C. Bubeck und G. Wegner, Thin Solid Films 159, 221 (1988). Der Transport zu einer hydrophoben Oberfläche kann ohne Verlust von Schraubenbildung aus einem fluid-analogen Zustand erreicht werden, in dem die Octadecylseitenketten weitgehend ungeordnet (fluidähnlich) sind.

Das verwendete ungeordnete Copolymer enthielt beispielsweise 32 Mol.% octadecyltragende Wiederholungseinheiten. Eine Lösung von 0,1 mg dieses Polymeren auf 1 ml $CHCl_3$ wird auf einer reinen Wassersubphase in einer handelsüblichen Langmuir-Filmwaage (Hersteller z.B. Meßgerätewerk Lauda) gespreitet, auf 20 bis 25 mN/m komprimiert und als Y-Schicht bei einer Probenhubgeschwindigkeit von 25 mm/min auf das hydrophobe feste Substrat übertragen. Die stäbchenförmigen Polymeren richten sich zu einem gewissen Grade auf der Wasseroberfläche und dann während der Übertragung parallel zur Tauchrichtung aus, was zu einer strukturellen und einer optischen Anisotropie führt. In getrennten Experimenten lassen sich die Brechzahlen in allen drei Raumrichtungen ableiten. Eine einzige Doppelschicht ist 3,5-3,7 nm dick. Als photoadressierbare Markierung wurde Fettrot bläulich (C.I. Nr. 26 050) verwendet, das folgende Stukturformel aufweist

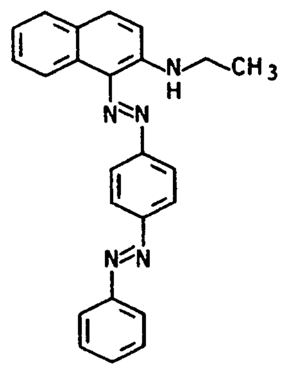

und in der oleophilen Matrix der Alkylseitenketten der Polymeren gelöst werden kann, indem man diese zusammen mit dem Polypetid auf der Wasseroberfläche spreitet (vgl. G. Duda und G. Wegner, Macromol. Chem., Rapid Commun., 9, 495 (1988)). Homogene Mischungen, die bis zu 15 % Farbstoffmoleküle auf 100 Polymerwiederholungseinheiten enthielten, mit einem dichroitischen Verhältnis OD/OD″ = 1,5, das auf eine bevorzugte Ausrichtung der Farbstoffmoleküle senkrecht zur α-Schraubenhauptachse hindeutet, können so aufgebaut werden. Im vorliegenden Falle wurden Mischungen, die 7 Mol.% bzw. 15 Mol.% enthalten, eingesetzt.

Der Aufbau für das Auslesen von Informationen durch Oberflächenplasmonen (= PSP) wird schematisch in Fig. 1 gezeigt. Darin bedeutet 1 = Lichtquelle; 2 = Polymerschicht; 3 = Metallschicht; 4 = Glasobjektträger; 5 = Immersionsflüssigkeit; 6 = Glasprisma; 7 = Linse; 8 = Kamera (Bildschirm). Der Laserstrahl 1 (Ar-Ionenlaser, λ = 456 nm) wird in der üblichen Kretschmann-konfiguration (vgl. E. Kretschmann, Opt. Commun. 6, 185 (1972)) an die PSP-Moden an der Grenzfläche Silberschicht/Polymerschicht über ein Glasprisma angekoppelt. Die resonante Anregung von PSP in

einer lateral inhomogenen Grenzfläche erfolgt immer dann, wenn die Impulsbedingung $K_{Photon}$ = $K_{Oberflächenplasmon}$ zwischen den Parallelkomponenten des Photonenwellenvektors $K_{Photon}$ und dem PSP-Wellenvektor $K_{sp}$ erfüllt ist (vgl. B. Rothenhäusler und W. Knoll, Nature 332, 615 (1988)). Der letztere hängt empfindlich von der Dicke und der Brechzahl der Deckschicht ab, was zu dem beobachteten hohen Kontrast im Bild einer heterogenen Schicht führt. Alle Bilder wurden mit einer CCD-Kamera (= charge coupled device-Kamera) aufgenommen, für die spätere Analyse auf Band gespeichert oder direkt in ein Bildanalysensystem eingegeben.

Messungen des Reflexionsvermögens in Abhängigkeit des Winkels konnten mit demselben Aufbau durchgeführt werden, wenn die Linse und die Kamera durch eine Photodiode (vgl. B. Rothenhäusler, J.P. Rabe, P. Korpiun und W. Knoll, Surf. Sci 137, 373 (1984)) für die Aufzeichnung der reflektierten Lichtintensität ersetzt wurde.

Das Einbringen von Information erfolgte durch das Belichten der farbstoffdotierten Copolyglutamatdoppelschichten mit dem Strahl des Ar-Ionenlasers durch ein elektronenmikroskopisches Gitter als Maske. Die verwendete Leistung betrug 1-2 Watt bei $\lambda$ = 514 nm nahe am Absorptionsmaximum von Fettrot bei $\lambda$ = 540 nm (vgl. auch G. Duda und G. Wegner, Macromol. Chem., Rapid Commun., 9, 495 (1988)) während mehrerer Minuten, wodurch der Farbstoff gebleicht wurde, wie in einem getrennten Versuch überprüft wurde. Die identische Behandlung einer undotierten Schicht oder der unbeschichteten Silberschicht hatte im vorliegenden Fall keine nachweisbare Auswirkung auf das Auslesen mit PSP.

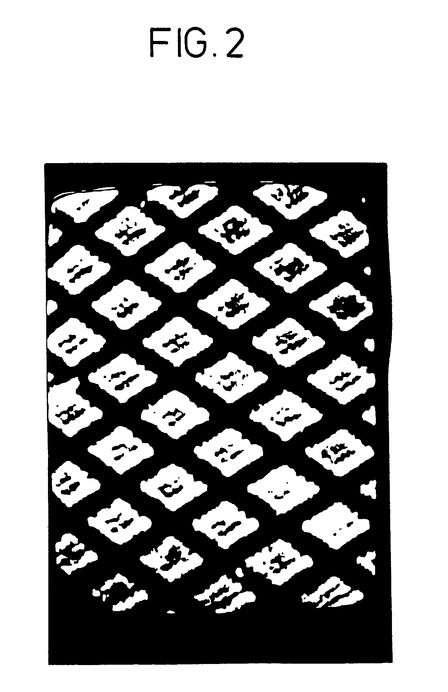

Fig. 2 zeigt das Oberflächenplasmonenmikroskopiebild (SPM-Bild), das mit p-polarisiertem (= parallel zur Einfallsebene polarisiertem) Licht von einer mit 7 Mol.% Fettrot dotierten Copolyglutamatdoppelschicht aufgenommen wurde. Eine vorherige Bestrahlung ($\lambda$ = 514 nm) durch ein als Maske verwendetes Kreuzgitter erfolgte bei einer Bestrahlungszeit von 8 Minuten bei einer Leistung von 2 W. Der Einfallswinkel $\Theta_0$ betrug 50,4°, wo die unbelichteten Bereiche unter den 20 $\mu$m breiten Streifen des als Maske verwendeten Kupfergitters in Resonanz sind und deshalb dunkel erscheinen (vgl. B. Rothenhäusler und W. Knoll, Nature 332, (1988)). Die Gitterkonstante ist 80 $\mu$m. Die belichteten Bereiche sind optisch verändert, wodurch sich ihr Resonanzwinkel zu geringfügig kleineren Werten $\Theta_1$ verschiebt. Bei $\Theta_0$ wird deshalb der größte Teil des Lichts total reflektiert, so daß sie hell erscheinen. Die Inhomogenität des von diesen Quadraten ausgehenden Lichts ist ein Interferenzeffekt: Die in den dunklen Bereichen resonant angeregten ausbreitungsfähigen PSP-Moden reichen in die belichteten Bereiche hinein, wo sie mit dem treibenden Photonenfeld kohärent interferieren (vgl. B. Rothenhäusler und W. Knoll, J. Opt. Soc. Am. B5, 1401 (1988)). Ähnliche Bilder wurden mit einer Copolyglutamatdoppelschicht aufgenommen, die mit 15 Mol.% Fettrot dotiert war.

Nur helle Bilder ohne Kontrast werden erhalten, wenn s-polarisiertes (= senkrecht zur Einfallsebene polarisiertes) Licht verwendet oder außerhalb der Resonanz angeregt wird.

Um die physikalische Grundlage dieses Kontrastmechanismus, der die Speicherung von Information in diesen ultradünnen Medien und das Auslesen mit einem so hohen Signal-Rauschverhältnis erlaubt, quantitativer zu verstehen, wurde das winkelabhängige Reflexionsvermögen gemessen. Wie erwartet verschiebt die PM-co-OLG-Doppelschicht die Resonanz der PSP-Kopplung in Bezug auf die Grenzfläche reines, unbeschichtetes Ag/Luft nach höheren Winkeln. Durch die Farbstoffdotierung erfolgt eine weitere Verschiebung der Resonanzkurven. Die gute Übereinstimmung zwischen den experimentellen Datenpunkten und den auf der Grundlage der Fresnelschen Theorie berechneten theoretischen Kurven beweisen die Gültigkeit der angenommenen Schichtarchitektur. Für das undotierte PM-co-OLG wurde eine mittlere (isotrope) Brechzahl von n = 1,48 angenommen, wie sie bei mehrlamelligen Proben gefunden wurde. Der einzige freie Anpassungsparameter ist dann die Dicke d der Doppelschicht. Der erhaltene Wert d = 3,5 nm ist in Übereinstimmung mit Kleinwinkelröntgenstrahldaten, die wiederum von mehrlamelligen Proben erhalten wurden. Die strukturellen Merkmale der ersten zwei Copolyglutamatschichten auf eine Ag-Oberfläche scheinen daher den Eigenschaften massiven (mehrlamelligen) Materials sehr ähnlich zu sein. Für die 7 Mol.% Farbstoff enthaltende Probe hatten Röntgenstrahldaten eine Zunahme der Dicke im Vergleich zu reinem PM-co-OLG von d = 0,25 nm gezeigt (vgl. G. Duda, Doktorarbeit, Universität Mainz, 1988)). Verwendung desselben Werts für die vorliegende Doppelschicht liefert eine effektive Brechzahl von n = 1,56. Bei Annahme einer linearen Zunahme der Schichtdicke mit wachsendem Farbstoffgehalt (vgl. G. Duda und G. Wegner, Macromol. Chem., Rapid Commun., 9, 495 (1988)) ergäbe sich für die Probe mit 15 Mol.% Fettrot eine effektive Brechzahl n = 1,73.

Die Absorption durch den Farbstoff ist vernachlässigbar, was auch durch Versuche mit dem Strahl eines HeNe-Lasers bei $\lambda$ = 633 nm, also weit weg von der Absorptionsbande des Farbstoffs, bestätigt wird.

Messungen des Reflexionsvermögens, die direkt von den Gitterstrukturen gemäß Figur 2 genommen wurden, liefern weitere Einsichten in den Kontrastmechanismus. Das mit einer 15 Mol.% Fettrot enthaltenden Probe erhaltene Resultat wurde mit dem verglichen, das von einer undotierten bzw. von einer dotierten aber unbelichteten Schicht erhalten wurde. Die Belichtung verschiebt die Resonanz auf den Wert für die undotierte Schicht. Daraus folgt jedoch nicht, daß der Farbstoff nach der Belichtung verschwindet und schließlich eine reine Polyglutamatmatrix verbleibt. Stattdessen werden vermutlich strukturelle Änderungen in der Polymerpackung induziert, höchstwahrscheinlich ein Übergang Helix-Knäuel in den belichteten Bereichen, die zu einer Verminderung der effektiven optischen Dicke führt, die für die PSP-Resonanzverschiebung verantwortlich ist. Qualitativ erklärt das die beobachtete Empfindlichkeit für das Ausleseverfahren. Kleine Veränderungen in den belichteten Bereichen führen zu einer leichten Verschiebung der scharfen Resonanzkurven - genug zur Erzeugung einer ausreichenden Differenz in der reflektierten Intensität zwischen belichteten und unbelichteten Bereichen. Ein Vergleich dieser Ergebnisse mit Untersuchungen der thermischen Stabilität von mehrschichtigem Copolyglutamat zeigt, daß die Schichten bis zu 150°C thermisch stabil sind; bei höheren Temperaturen wird nach dem Abkühlen ein Phasenwechsel in die $\beta$-gefaltete Schichtstruktur beobachtet.

Auch für diese Systeme ist eine Kontrastinversion (vgl. B. Rothenhäusler, und W. Knoll, Nature 332, 615 (1988)) durch Drehen der Probe um einige Zehntelgrad möglich, wodurch die belichteten Bereiche in Resonanz gebracht werden.

Die gespeicherte Information bleibt über mehrere Wochen erhalten. Die 15 Mol.% Farbstoff enthaltende Probe wurde 4 Wochen lang gelagert und dann wieder mit SPM untersucht. Die gespeicherte Information kann noch gelesen werden.

Mit dem erfindungsgemäßen Verfahren ist es demnach möglich, optische Information dauerhaft in einer Polymermatrix in Form eines flachen Films zu speichern, der nur 3,7 nm dick ist und beispielsweise unter Verwendung der Langmuir-Blodget-Tauchtechnik auf einen Festkörper übertragen wurde. Wellenlängenselektives Schreiben ist vorstellbar durch die Verwendung von Farbstoffen mit unterschiedlichen Absorptionsbanden, die z.B. in verschiedenen Schichten eines mehrlamelligen Stapels deponiert sind.

Das Auslesen der gespeicherten Information erfolgt erfindungsgemäß durch Oberflächenplasmonmoden unter Verwendung der in letzter Zeit entwickelten Oberflächenplasmonenmikroskopie. Der hohe Kontrast, der erreicht werden konnte, basiert auf der empfindlichen Abhängigkeit der Resonanzkopplung zwischen Photonen und PSP von kleinen Veränderungen in den optischen Eigenschaften (Real- und Imaginärteil der dielektrischen Funktion) des Speichermediums.

Beispiel 2

Auf einen mit 3 nm Chrom + 40 nm Gold überzogene Glasplatte (objektträger) wurde eine Lösung von 1 g Polymethylmethacrylat und 0,05 g Fettrot (C.I. Nr. 26 050) in 10 g Xylol aufgeschleudert (Umdrehungszahl: 2500 U/Min). Nach Entfernen des Lösungsmittels wurde die Schichtdicke des Polymethylmethacrylats zu 30 nm bestimmt. Diese dünne Polymerschicht, die den Farbstoff gleichmäßig gelöst enthielt, wurde entsprechend Beispiel 1 durch ein Gitter als Maske bestrahlt ($\lambda$ = 514,5 nm; Leistung: 1 W; Bestrahlungszeit 5 Minuten). Wie in Beispiel 1 lassen sich die in der Polymerfolie gespeicherten Informationen durch Oberflächenplasmonen auslesen.

Beispiel 3

Eine Lösung von Pentacosa-10,12-diinsäure in n-Hexan (ohne Farbstoffzusatz) wird auf einer reinen Wassersubphase in einer Langmuir-Filmwaage gespreitet und wie in Beispiel 1 beschrieben als Y-Schicht auf einen mit einer Cr/Au-Schicht versehenen Glasobjektträger nach der Langmuir-Blodgett-Technik aufgebracht. Auflegen einer Kupfermaske und Bestrahlen mit UV-Licht ($\lambda$ 294 nm) ergibt Polymerisation in den bestrahlten Bereichen. Die so gespeicherte Information läßt sich nach Entfernen der Maske und mehrtägigem Lagern mittels Oberflächenplasmonen auslesen.

## Ansprüche

1. Verfahren zum Auslesen von Informationen, die in dünnen Polymerschichten gespeichert sind, dadurch gekennzeichnet, daß Informationen, die in Polymerschichten einer Schichtdicke < 0, 1 $\mu$m, die auf eine metallische oder Halbleiter-Schicht aufgebracht sind, durch bildmäßiges Belichten oder lithographische Verfahren mittels elektromagnetischer Strahlen oder Teilchenstrahlen, die in den bestrahlten Bereichen eine bleibende Änderung der Eigenschaften der Polymerschichten hervorrufen, eingebracht worden sind, durch Oberflächen-Plasmonen ausgelesen werden.

2. Verfahren nach Anspruch 1, dadurch gekennzeichnet, daß die Polymerschichten einer Schichtdicke < 0,1 $\mu$m mittels der Langmuir-Blodgett-Technik, durch Aufschleudern, Aufdampfen oder Adsorption aus der Flüssigphase auf eine metallische oder Halbleiter-Schicht aufgebracht worden sind.

3. Verfahren nach einem der vorhergehenden Ansprüche, dadurch gekennzeichnet, daß die Polymerschichten mindestens einen Farbstoff in definierter Konzentration pro Flächeneinheit enthalten.

4. Verfahren nach Anspruch 3, dadurch gekennzeichnet, daß als Farbstoff mindestens ein oleophiler Farbstoff, der in organischen Lösungsmitteln löslich ist, eingesetzt wird.

5. Verfahren nach einem der vorhergehenden Ansprüche, dadurch gekennzeichnet, daß als Polymere für die Polymerschichten organische Polymerisate oder organische Polykondensate eingesetzt werden.

6. Verfahren nach Anspruch 5, dadurch gekennzeichnet, daß als organische Polymerisate Homo- oder Copolymerisate von Acrylsäure- oder Methacrylsäurealkylestern eingesetzt werden.

7. Verfahren nach Anspruch 5, dadurch gekennzeichnet, daß als organische Polykondensate in $\gamma$-Stellung langkettig substituierte Polyglutamate oder in $\gamma$-Stellung unterschiedlich alkylsubstituierte Copolyglutamate eingesetzt werden.

8. Verfahren nach Anspruch 5 oder 7, dadurch gekennzeichnet, daß als organisches Polykondensat Poly($\gamma$-methyl-L-glutamat-co-$\gamma$-n-octadecyl-L-glutamat) eingesetzt wird.

9. Verfahren nach einem der vorhergehenden Ansprüche, dadurch gekennzeichnet, daß das bildmäßige Belichten mittels elektromagnetischer oder Teilchenstrahlen unter Verwendung einer auf die Polymerschichten aufgelegten Maske erfolgt.

10. Verfahren nach einem der Ansprüche 1 bis 8, dadurch gekennzeichnet, daß das lithographische Verfahren durch direkte Bestrahlung mit einem fokussierten Elektronen- oder Laserstrahl erfolgt.

11. Verfahren nach einem der vorhergehenden Ansprüche, dadurch gekennzeichnet, daß die durch bildmäßiges Belichten oder lithographische Verfahren mittels elektromagnetischer Strahlen oder Teilchenstrahlen in den bestrahlten Bereichen hervorgerufene bleibende Änderung der Eigenschaften der Polymerschichten in einer strukturellen Phasenumwandlung des Polymeren besteht.

12. Verfahren nach einem der Ansprüche 3 bis 11, dadurch gekennzeichnet, daß die durch bildmäßiges Belichten oder lithographische Verfahren mittels elektromagnetischer Strahlen oder Teilchenstrahlen in den bestrahlten Bereichen hervorgerufene bleibende Änderung der Eigenschaften der Polymerschichten durch Entfärben oder Umwandeln des oder der darin enthaltenen Farbstoffe erhalten wird.

13. Verfahren nach einem der vorhergehenden Ansprüche, dadurch gekennzeichnet, daß das Auslesen von Informationen durch Oberflächen-Plasmonen unter Verwendung eines Laserstrahls erfolgt.

FIG.1

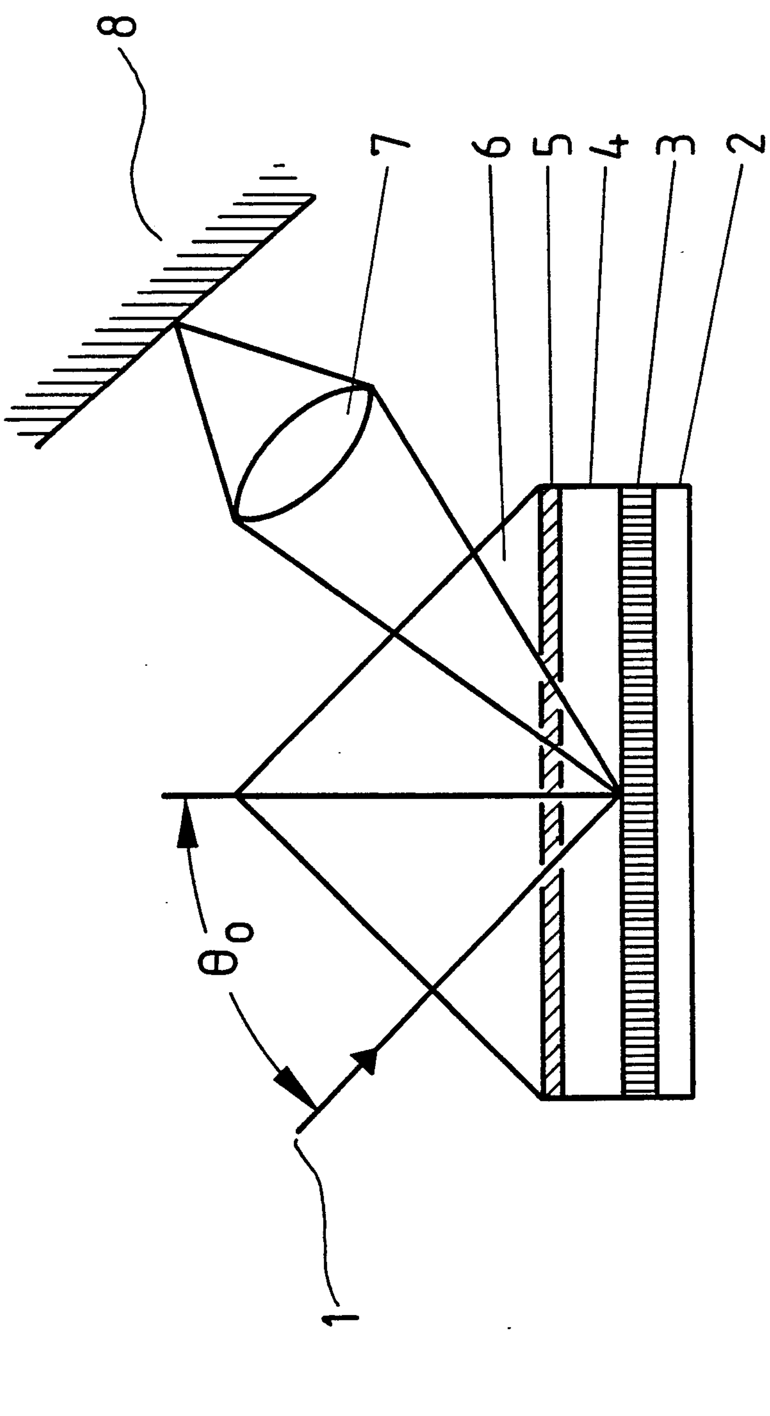

FIG. 2